# EUROPEAN PATENT SPECIFICATION

(11) **EP 1 175 000 B1**
(45) Date of publication and mention of the grant of the patent: **18.01.2006**
(21) Application number: 00830510.4
(22) Date of filing: 19.07.2000
(51) Int. Cl.: H02P 6/22, H02P 6/18

(54) **Start procedure for brushless motors**
Startvorgang für bürstenlose Motoren
Procédure de démarrage pour moteur sans balai

(43) Date of publication of application: 23.01.2002
(73) Proprietor: STMicroelectronics S.r.l., 20041 Agrate Brianza (Milano) (IT)
(72) Inventor: Viti, Marco, 20010 Cornaredo (IT)
(74) Representative: Pellegri, Alberto

(56) References cited:
- EP-A- 0 945 975
- WO-A-90/10973
- US-A- 4 876 491
- US-A- 5 117 165

## Description

### FIELD OF THE INVENTION

The present invention relates to multiphase DC brushless motors (typically three-phase motors) and more in particular to a start-up procedure for accelerating the rotor until it reaches a pre-established speed.

### BACKGROUND OF THE INVENTION

A brushless motor has a permanent magnet rotor and a stator made up of a certain number of windings (commonly three) normally connected in star or polygonal (triangle or delta) configuration.

As well as the conventional star or polygonal configurations, the windings may be configured according to a so-called "independent phases" configuration, where both terminals of each phase winding may be accessed externally and driven independently from the other phase windings.

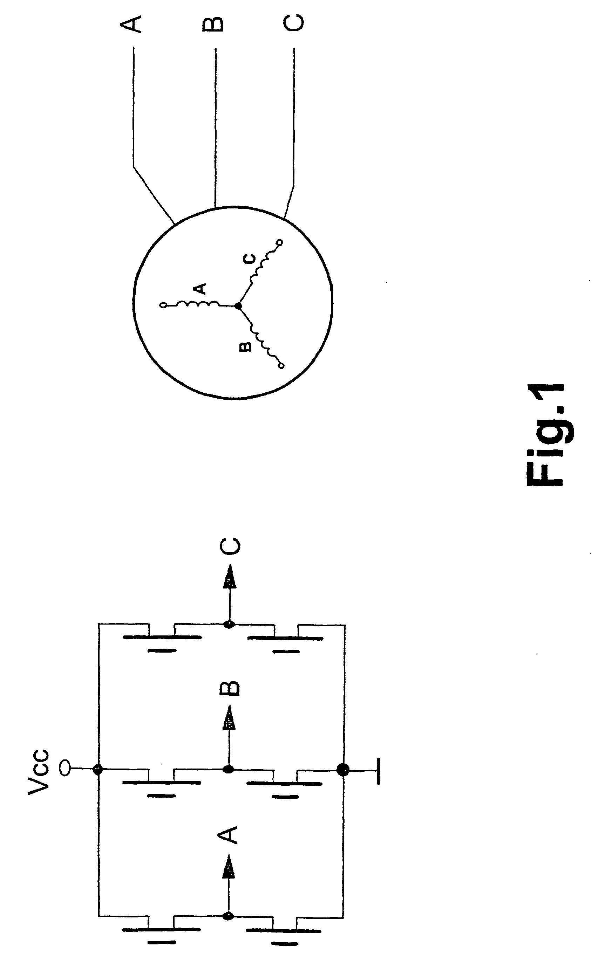

In the most common case of star or triangle configured three-phase motors, the windings are driven by way of integrated circuits whose output stage, generally comprises a full wave three-phase bridge circuit made up of six bipolar or MOS power transistors. Figure 1 shows a typical output stage as well as the scheme of a three-phase DC brushless motor connected to it.

The most typical driving mode associated with a motor of this type is the so-called "bipolar" mode, in which at each instant two windings are driven while the third is in a high impedance state (tristate).

The phase windings being driven are switched according to a cyclic sequence that should be synchronized with the instantaneous position of the rotor (that is, of its magnetic axis or axes) which, in a bipolar driving mode, may be easily established by monitoring the back electromotive force (BEMF) sensed of the phase winding that is at the moment in a high impedance state, or through dedicated position sensors.

In order to improve the performance of the system, the windings should be switched such that the motor may operate at the maximum efficiency level, which is achieved by maintaining a precise phase relationship between the current forced through the winding and the BEMF induced thereon.

Start-up is accomplished by switching to supply the windings according to a certain switching sequence to induce a rotation to a successive position in the desired direction at a progressively increasing speed until the motor reaches a certain speed.

It is not possible to verify that the motor is indeed rotating in the desired manner by sensing the BEMF during such an acceleration phase, as it is done during the normal running of the motor. Indeed, until an adequate speed is reached, the back electromotive signal does not have a sufficient amplitude to be reliably used to sense the speed and position of the rotor.

A method for controlling the speed of the rotor consists in sensing the position of the rotor at pre-established intervals of time while the motor is excited according to an electric current path chosen in function of the position, in order to induce the desired rotation. In particular, the document US-A-4,876,491 of Conner Peripherals discloses a method in which the speed of the rotor is controlled by detecting at pre-established periods of time the position of the rotor, by carrying out measurements on all the windings and consequently selecting the appropriate excitation current path. Basically, the disclosed method comprises excitation phases, during which an acceleration is impressed upon the rotor, alternated to rotor position sensing phases during which the speed remains practically constant.

In order to rapidly bring the motor to a desired speed, it is essential to increase as much as possible the duration of the excitation phases and minimize the duration of the sensing phases.

According to this known method, the excitation phases have an equal duration of time and thereby at high speeds there is the possibility that, by exciting a winding for a relatively long period, the rotor may surpass the excited winding and be slowed down. On the other hand, if the excitation phases were too short, the acceleration characteristics of the rotor would be reduced. In addition, each sensing phase would be relatively long and therefore a longer time will be required to bring the rotor to the required speed.

The US patent No. 5,117,165 discloses a closed-loop control method for controlling a brushless DC motor from a standstill to a "medium" speed by varying or leaving unchanged the duration of each phase excitation

### OBJECT AND SUMMARY OF THE INVENTION

It has been found and is the object of the present invention a start-up procedure for a brushless motors that envisages excitation phases whose duration is progressively reduced as the speed of the rotor increases and viceversa, alternated to sensing phases whose duration is overall sensibly diminished in comparison to the known methods.

The procedure of the invention substantially consists in determining the start-up position of the rotor, forcing a current through the motor's windings for an established period of time and, at the end of each of these excitation phases, determining the position of the rotor. A characterizing feature of the invention is the fact that the duration of the excitation phases is not constant as in prior art methods, on the contrary it is updated depending upon the number of consecutive times in which the rotor is sensed to be in the same position or in a different position.

According to a preferred embodiment, the position of the rotor is sensed by way of inductance measurements carried out at the end of each excitation phase and consisting in forcing short current pulses to the windings and determining which of them has the minimum electric time constant (inductive sensing).

A further novel aspect of the method of the invention is the fact that such a test is not performed on all the windings but on a restricted number of them, on those functionally close to the previously sensed position of the rotor.

The start-up procedure of the invention may be terminated to proceed with a classic driving mode of the motor based on the sensing the BEMF, when the speed of the rotor has reached or surpassed a prefixed value, or when the rotor has simultaneously reached the desired speed and position.

Alternatively, the procedure of invention can be stopped generating an alarm signal, if the desired speed is not reached after a certain maximum allowable time has elapsed from the beginning of the start-up.

The invention is more precisely defined in claim 1, preferred embodiments being defined in subordinate claims 2 to 7.

### BRIEF DESCRIPTION OF THE DRAWINGS

The various aspects and advantages of the invention will be more evident through the following a detailed description and by referring to the attached drawings, in which:
**Figure 1** is the scheme of a three-phase full-bridge driving stage and of a star configured three-phase DC brushless motor connectable to it;
**Figure 2** is a flow chart of a preferred embodiment of the procedure of the invention.

### DESCRIPTION OF AN EMBODIMENT OF THE INVENTION

The start-up procedure of the invention consists in determining the initial position of the rotor either by inductive sensing analysis to all the possible configurations or by ensuring that the rotor be aligned with a prefixed position (alignment) before starting it. Once the position of the rotor is determined or imposed by any suitable means, an excitation phase is carried out by forcing a current through the windings according to a certain switching scheme and for an established period of time.

Thereafter, the position of the rotor is sensed preferably by carrying out tests that may be advantageously limited to positions functionally near the last known position of the sensor.

In order to detect the current position of the rotor, it may not be always required to test all possible positions and to verify which one is really aligned with the magnetic axis of the rotor. This because, if the speed of the motor and the duration of each excitation phase are relatively small, it would be useless to test angular positions that are immediately before the last sensed position, because they could hardly have been reached by the rotor.

It has been found that it is sufficient to test positions including the last sensed position and few successive positions, to find the new angular position reached by the rotor.

In this manner, the duration of the sensing phase, during which the rotor is not accelerated, may be sensibly reduced.

Depending on the number of consecutive excitation phases of the same duration in which the rotor may have translated from a certain position to a new one, the duration of each excitation phase and the switching sequence are modified, increasing or reducing the angular distance between the sensed position and the winding to be excited next. If the so adjusted duration of the new excitation phase is insufficient to move the rotor, then the winding that immediately follows the sensed position of the rotor is excited rather than exciting a relatively more distant one, in order to produce the maximum torque.

The great advantage of producing excitation phases of variable duration is that at relatively high speeds the duration may be reduced, thus preventing that the rotor having surpassed the currently excited winding, be decelerated rather than accelerated, whereas at relatively low speeds, it is possible to force longer current pulses to achieve faster speed changes.

For example, the following procedure may be followed:
if for three consecutive excitation phases during which current is forced through the motor windings for 12ms no change of the position of the rotor is detected, then the duration of each excitation phase may be doubled to 24ms;
on the contrary, if for two consecutive excitation phases of 12 ms the rotor changes its position, then the duration of the excitation phase is halved to 6ms.

In order to clearly illustrate the various aspects of the present invention, let us consider a practical case of driving a three-phase star-connected brushless motor in which one winding at the time is brought to a high impedance state (tristate) while the other two windings are crossed by a drive current. Of course, the start-up procedure of the invention may be advantageously applied even to a motor with a greater number of phases or with its windings not connected in star configuration but in a polygonal (delta) configuration or independently connected.

Referring to Figure 1, there are six possible ways to power a three-phase motor, corresponding to as many positions of the rotor.

**Table 1**

| Position | Input | Output |
|---|---|---|
| 0 | B | C |
| 1 | A | C |
| 2 | A | B |
| 3 | C | B |
| 4 | C | A |
| 5 | B | A |

Depending on the current position of the rotor, a current may be forced for a certain period of time according to one of the above-indicated current paths.

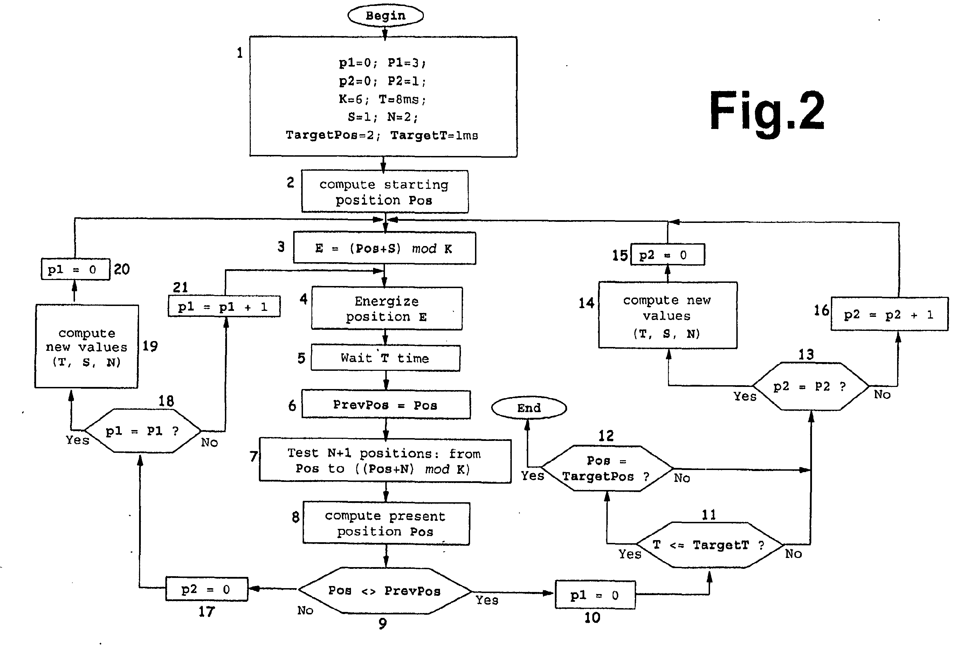

A preferred start-up procedure of the invention is illustrated in detail in figure 2 where each parameter is defined according to the following table:

**Table 2**

| | |
|---|---|
| p1 | number of consecutive excitation phases of equal duration during which a change of the rotor position has not occurred. |
| P1 | maximum number of consecutive excitation phases of equal duration during which changes of the rotor position may not occur. |
| p2 | number of consecutive excitation phases of equal duration during which a change of the rotor position has occurred. |
| P2 | maximum number of consecutive excitation phases of equal duration during which a change of the rotor position may occur. |
| K | number of possible positions of the rotor (in a three-phase motor K=6) |
| T | duration of a period of excitation phase (between two successive tests). |
| TargetT | minimum duration of the time interval T |
| Pos | current position of the rotor |
| PrevPos | position previously occupied by the rotor. |
| TargetPos | target final position |
| E | position congruent with the drive current path during an excitation phase. |
| S | angular distance between the current position Pos and the position E. |
| N | number of positions to be tested (beside the last position) to identify the current position |

The first step consists in making the values of p1 and p2 equal to zero, and in assigning desired values to the other parameters.

In the example of figure 2 in particular, the duration of a excitation phase is set to 8ms while the start-up process is halted if such a duration is less than 1ms and if simultaneously the rotor is in the position 2.

In the successive step (2) the initial position of the rotor is determined by way for example of the so-called inductive sensing technique, or by aligning the rotor with a predefined position.

Once the position Pos of the rotor is determined or fixed another phase E is excited (following the starting position (phase) in the desired direction of rotation) that is at S positions (phases) after the starting position as depicted in the blocks 3 and 4, for a time T (5). The position E is chosen as such that its angular position from the starting or current position Pos is S positions, being S a parameter whose value is assigned.

The parameter S may assume integer values ranging between 1 and half the number of positions (phases) of the rotor which in the case considered is equal to 3. This maximum value must be defined because values greater than that would tend to make the rotor rotate in a direction opposite to the desired one.

In the block 6 the last detected position is stored while in block 7 it is verified which of the chosen N+1 positions corresponds to the current position (8).

Finally the last detected position Pos is compared with the preceding one PrevPos in order to verify whether the rotor has translated or not. If Pos is equal to PrevPos (9), the counting of the changes of the consecutive positions p2 (17) is set to zero while the number of consecutive times p1 in which the rotor has not moved is compared (18) with the respective maximum number P1.

The value of p1 is incremented (21), if it has not reached yet its maximum value, and hence the motor is excited using the same drive current path (4) of the preceding excitation phase. In the contrary case, new values are set (19) for the parameters T, S and N and the counting p1 (20) is set to zero (20). The new values of T and N should preferably be greater than the preceding ones.

In the example, T is doubled and N is increased by a unit (for example, from 2 to 3), while the new value of S will be less than the preceding one or unchanged (for example by setting S=1). Finally, the motor is driven according to a scheme corresponding to a new position E angularly incremented of S positions from Pos, in the direction of rotation.

If the rotor has moved (9), the counting of p 1 is set to zero (10) and the speed is assessed to ascertain whether the established speed has been reached or not. This is done by comparing the duration T of the excitation phase with the minimum value TargetT(11). If T≤TargetT then the current position Pos is detected to determine whether it coincides with the pre-established TargetPos, terminating the routine if this is verified.

In case the start-up procedure should be terminated upon reaching the required speed, regardless of the position of the rotor, the block 12 must be omitted or disabled.

In block 13 the count p2 of the number of phases of the same duration during which a change of the position of the rotor has occurred is compared with the respective maximum allowed value P2.

If p2 has not yet reached the maximum value P2, it is incremented (16) before verifying the drive current path of the position E according to which exciting the motor during the successive excitation phase (3). On the contrary, the values (14) of the parameters T, S and N are updated for example by halving T, decreasing N and increasing S, while setting the count p2 (15) to zero.

The start-up procedure of the invention provides for a rapid start-up of the motor and ensures that the speed of the rotor, and optionally also its position, at the end of the start-up have pre-established values.

## Claims

1. A start-up procedure for a multiphase brushless motor to be accelerated until reaching a certain speed, comprising the steps of determining the starting position of the rotor, forcing a drive current in at least one of the phase windings (A, B, C) of the motor for an established period of time according to a switching sequence for inducing a rotation in the desired direction, sensing the position (Pos) reached by the rotor at the end of each excitation phase, determining the duration (T) of each excitation phase in function of said sensing, interrupting the start-up procedure when the established speed has been reached or exceeded, **characterized in that** the procedure comprises
increasing or reducing the duration (T) of the next phase of excitation and modifying said switching sequence based upon the number of consecutive times in which the current position (Pos) is found to be the same or different from the previously detected position (PrevPos), respectively.

2. The start-up procedure of claim 1 comprising the steps of counting the number (p1) of consecutive phases of excitation of equal duration during which the position of the rotor is the same of the preceding position, increasing the duration (T) of the next excitation phase and forcing current during the successive excitation phase through a winding at a not augmented distance from the current position if said count (p1) exceeds a first pre-established value (P1);
counting the number (p2) of consecutive excitation phases of equal duration during which the position of the rotor is different from the previous position, decreasing the duration (T) of the next excitation phase and forcing current during the successive excitation phases through a winding at a not decreased distance from the current position if said count (p2) exceeds a second pre-established value (P2).

3. The procedure of claim 1 or 2, wherein the position of the rotor (Pos) is determined by inductive sensing on different windings of the motor.

4. The procedure according to claim 1 or 2 comprising a preliminary alignment of the rotor in a pre-defined initial position.

5. The procedure according to one of claims 1 to 4, wherein the position of the rotor is determined by an inductive sensing on only the windings near the previously sensed position (PrevPos).

6. The procedure of claim 5, wherein the number of windings subject to inductive sensing (N) is incremented or decremented depending on the number of consecutive times in which the sensed position (Pos) is respectively equal or different from the previously sensed position (PrevPos).

7. The procedure according to any of the preceding claims wherein the start-up procedure is stopped upon reaching an established speed and an established position (TargetPos) of the rotor.

8. The procedure according to any of the preceding claims wherein an error signal is generated and the start-up procedure is interrupted after an established time has elapsed from the start of the procedure.

## Patentansprüche

1. Anlaufverfahren für einen bürstenlosen Mehrphasenmotor, der beschleunigt werden soll, bis er eine bestimmte Geschwindigkeit erreicht, das die Schritte aufweist: Bestimmen der Startposition des Rotors, Treiben eines Antriebsstroms in mindestens einer der Phasenwicklungen (A, B, C) des Motors für eine festgelegte Zeitspanne entsprechend einer Schaltfolge zum Hervorrufen einer Rotation in die gewünschte Richtung, Abtasten der Position (Pos), die durch den Rotor am Ende jeder Erregungsphase erreicht wird, Bestimmen der Dauer (T) jeder Erregungsphase als Funktion des Abtastens, Unterbrechen des Anlaufverfahrens, wenn die festgelegte Geschwindigkeit erreicht oder überschritten worden ist, **dadurch gekennzeichnet, daß** das Verfahren aufweist:
Erhöhen oder Reduzieren der Dauer (T) der nächsten Erregungsphase und Modifizieren der Schaltfolge beruhend auf der Anzahl aufeinanderfolgender Male, in denen festgestellt wird, daß die gegenwärtige Position (Pos) dieselbe bzw. eine andere als die vorher detektierte Position (PrevPos) ist.

2. Anlaufverfahren nach Anspruch 1, das die Schritte aufweist:
Zählen der Anzahl (p1) aufeinanderfolgender Erregungsphasen gleicher Dauer, während der die Position des Rotors dieselbe wie die vorhergehende Position ist, Erhöhen der Dauer (T) der nächsten Erregungsphase und Treiben von Strom während der folgenden Erregungsphase durch eine Wicklung in einem nicht vergrößerten Abstand von der gegenwärtigen Position, wenn der Zählwert (p1) einen ersten vorher festgelegten Wert (P1) überschreitet;
Zählen der Anzahl (p2) aufeinanderfolgender Erregungsphasen gleicher Dauer, während der die Position des Rotors sich von der vorhergehenden Position unterscheidet, Senken der Dauer (T) der nächsten Erregungsphase und Treiben von Strom während der folgenden Erregungsphasen durch eine Wicklung in einem nicht verkleinerten Abstand von der gegenwärtigen Position, wenn der Zählwert (p2) einen zweiten vorher festgelegten Wert (P2) überschreitet.

3. Verfahren nach Anspruch 1 oder 2, wobei die Position des Rotors (Pos) durch induktive Abtastung an unterschiedlichen Wicklungen des Motors bestimmt wird.

4. Verfahren nach Anspruch 1 oder 2, das eine vorausgehende Ausrichtung des Rotors in einer vordefinierten Anfangsposition aufweist.

5. Verfahren nach einem der Ansprüche 1 bis 4, wobei die Position des Rotors durch eine induktive Abtastung nur an den Wicklungen nahe der vorhergehend abgetasteten Position (PrevPos) bestimmt wird.

6. Verfahren nach Anspruch 5, wobei die Anzahl der Wicklungen, die der induktiven Abtastung (N) unterliegen, abhängig von der Anzahl der aufeinanderfolgenden Male erhöht oder gesenkt wird, in der die abgetastete Position (Pos) gleich bzw. anders als die vorhergehend abgetastete Position (PrevPos) ist.

7. Verfahren nach einem der vorhergehenden Ansprüche, wobei das Anlaufverfahren beim Erreichen einer festgelegten Geschwindigkeit und einer festgelegten Position (TargetPos) des Rotors gestoppt wird.

8. Verfahren nach einem der vorhergehenden Ansprüche, wobei ein Fehlersignal erzeugt wird und das Anlaufverfahren unterbrochen wird, nachdem eine festgelegte Zeit nach dem Beginn des Verfahrens verstrichen ist.

## Revendications

1. Procédure de démarrage d'un moteur sans collecteur polyphasé à accélérer jusqu'à atteindre une certaine vitesse, comprenant les étapes consistant à déterminer la position de démarrage du rotor, à forcer un courant d'excitation dans au moins l'un des enroulements de phase (A, B, C) du moteur pendant une durée établie selon une séquence de commutation pour provoquer une rotation dans la direction désirée, à détecter la position (Pos) atteinte par le rotor à la fin de chaque phase d'excitation, à déterminer la durée (T) de chaque phase d'excitation en fonction de ladite détection, à interrompre la procédure de démarrage quand la vitesse établie a été atteinte ou dépassée, **caractérisée en ce que** la procédure comprend :
augmenter ou réduire la durée (T) de la phase d'excitation suivante et modifier la séquence de commutation sur la base du nombre de fois successives pendant lequel la position courante (Pos) est trouvée être identique ou différente de la position détectée précédemment (PrevPos), respectivement.

2. Procédure de démarrage selon la revendication 1, comprenant les étapes consistant à :
compter le nombre (p1) de phases d'excitation successives de durées égales pendant lesquelles la position du rotor est identique à la position précédente, augmenter la durée (T) de la phase d'excitation suivante et forcer le courant pendant la phase d'excitation suivante par l'intermédiaire d'un enroulement à une distance non augmentée par rapport à la position courante si le comptage (p1) dépasse une première valeur prédéterminée (P1) ;
compter le nombre (p2) de phases d'excitation consécutives de durées égales pendant lesquelles la position du rotor est différente de la position précédente, diminuer la durée (T) de la phase d'excitation suivante et forcer le courant pendant les phases d'excitation successives par l'intermédiaire d'un enroulement à une distance non diminuée de la position courante si le comptage (p2) dépasse une seconde valeur prédéterminée (P2) .

3. Procédure selon la revendication 1 ou 2, dans laquelle la position du rotor (Pos) est déterminée par détection inductive sur des enroulements différents du moteur.

4. Procédure selon la revendication 1 ou 2, comprenant un alignement préliminaire du rotor sur une position initiale prédéfinie.

5. Procédure selon l'une quelconque des revendications 1 à 4, dans laquelle la position du rotor est déterminée par détection inductive sur les seuls enroulements proches de la position détectée précédente (PrevPos).

6. Procédure selon la revendication 5, dans laquelle le nombre d'enroulements soumis à détection inductive (N) est incrémenté ou décrémenté en fonction du nombre de fois successives pendant lesquelles la position détectée (Pos) est respectivement égale ou différente de la position détectée précédente (PrevPos).

7. Procédure selon l'une quelconque des revendications précédentes, dans laquelle la procédure de démarrage est arrêtée lorsque l'on a atteint une vitesse déterminée et une position déterminée (TargetPos) du rotor.

8. Procédure selon l'une quelconque des revendications précédentes, dans laquelle un signal d'erreur est produit et la procédure de démarrage est interrompue après qu'une durée établie s'est écoulée à partir du début de la procédure.
